(19) **Europäisches Patentamt**
**European Patent Office**
**Office européen des brevets**

(11) **EP 3 312 025 B1**

(12) **EUROPEAN PATENT SPECIFICATION**

(45) Date of publication and mention
of the grant of the patent:
**07.08.2019 Bulletin 2019/32**

(51) Int Cl.:
***B60C 11/03*** *(2006.01)*   ***B60C 11/11*** *(2006.01)*

(21) Application number: **16811738.0**

(22) Date of filing: **17.06.2016**

(86) International application number:
**PCT/JP2016/068060**

(87) International publication number:
**WO 2016/204264 (22.12.2016 Gazette 2016/51)**

(54) **TIRE**

REIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.06.2015 JP 2015123090**

(43) Date of publication of application:
**25.04.2018 Bulletin 2018/17**

(73) Proprietor: **Bridgestone Corporation**
**Tokyo 104-8340 (JP)**

(72) Inventors:
• **ONISHI, Yusuke**
**Tokyo 104-8340 (JP)**

• **IWAMOTO, Taro**
**Tokyo 104-8340 (JP)**
• **UCHIYAMA, Masataka**
**Tokyo 104-8340 (JP)**

(74) Representative: **Oxley, Robin John George**
**Marks & Clerk LLP**
**15 Fetter Lane**
**London EC4A 1BW (GB)**

(56) References cited:
**EP-A2- 1 120 296        JP-A- 2003 205 706
JP-A- 2008 024 270        JP-A- 2009 132 177
JP-A- 2015 227 137        US-A1- 2013 340 906**

**Description**

BACKGROUND OF THE INVENTION

1. Field of the Invention

The present invention relates to a tire suited for agricultural machinery featuring excellent traction performance especially in farm fields.

2. Description of the Related Art

The road surface conditions of irregular terrains, such as plowland where tires for agricultural machinery are used vary with rain and other weather conditions which change from region to region, from season to season, from day to day, and even within a day. And they can also vary with the crops being raised and the stages of cultivation (tilling, planting, irrigation, harvesting) . As measures to secure adequate traction of the tires under these varied conditions, the height of lug blocks of the tire is set higher, or the angle of extension of lug blocks is brought closer to the tire axial direction. In this manner, attempts are made to enhance the power of scraping the ground on farm fields. On the other hand, the tires for agricultural machinery must run on ordinary roads, moat of which being paved roads, during the travel to the farm fields. Hence, with the tires having the height of lug blocks and the extension angle of lug blocks set as described above, there have been problems of low uneven wear resistance on paved roads or soil discharge performance on farm fields due to the insufficiency, etc., of the block rigidity. As a measure to solve these problems, it is conceivable that the angle of extension of the lug block is inclined from the tire axial direction toward the direction along the tire circumference. The lug blocks arranged in such a manner, however, will cause a drop in traction of the tires when they run on farm fields. Patent Documents 1 and 2 disclose technology for securing traction of tires on farm fields while securing uneven wear resistance of the tires on the paved road.

Attention is also drawn to US2013/0340906 which discloses the features of the pre-characterizing portion of claim 1.

RELATED ART DOCUMENT

Patent Document

Patent Document 1: Japanese Unexamined Patent Application Publication No. 2006-273052
Patent Document 2: Japanese Unexamined Patent Application Publication No. 2012-51478

SUMMARY OF THE INVENTION

Problem to be Solved by the Invention

The method as disclosed in Patent Documents 1 and 2 surely assures traction of tires in farm fields while retaining uneven wear resistance on paved roads. In this case, however, it is not the primary function of the tread pattern formed by the lug blocks that is used to ensure the uneven wear resistance on paved roads and the traction on farm fields. Therefore, an object of the present invention is to provide a tire featuring a tread pattern which improves the traction performance of the tire in farm fields while retaining uneven wear resistance thereof on the paved road.

Means for Solving the Problem

To solve the above-described problems, a tire according to this invention is provided as claimed in claim 1.

According to this arrangement, there are greater friction forces in the center region of the tire, and also there are wider bottom areas between lug blocks in the shoulder regions. Hence, the traction performance and soil discharge performance of the tire on farm fields can be improved while retaining uneven wear resistance on paved roads.

BRIEF DESCRIPTION OF THE DRAWINGS

FIG. 1 is a sectional view of a tire and a perspective view of a tread region.
FIG. 2 is a developed view of a tread pattern.
FIG. 3 is a perspective view and cross sections of a lug block.
FIG. 4 is schematic representations showing the mechanism of traction during travel on a farm field.
FIG. 5 is a table showing the results of test examples.

BEST MODE FOR CARRYING OUT THE INVENTION

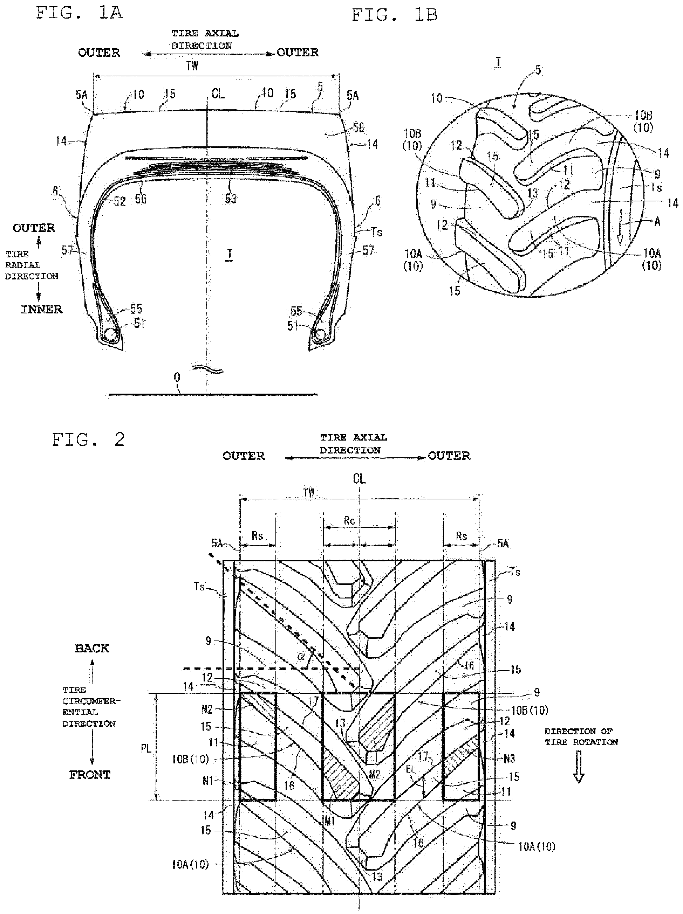

FIGS. 1A and 1B are a sectional view and an appearance perspective view of a tire T according to the present embodiment. FIG. 2 is an illustration showing a tread pattern in the tread region 5. As shown in FIG. 1A, the tire T includes bead cores 11 consisting mainly of cord members, a carcass 52, a belt layer 53, bead filler 55 consisting mainly of rubber member, an inner liner 56, side rubber 57, and tread rubber 58. The tire T has a belt layer 53, consisting of one or more of belts, on the outer peripheral side of the crown region of the carcass 52, which is toroidally astride a pair of bead regions formed by a bead filler 55 and a bead core 51. Disposed on the radially outside of the belt layer 53 is the tread rubber 58 constituting the tread region 5 of the tire T including the crown region of the carcass 52, the belt layer 53, and the tread rubber 58. Also, disposed on the outside of the side areas of the carcass 52 are the side rubbers 57 from the bead regions and overlapping with the tread rubber 58, constituting the side regions 6 of the tire T. The whole inner peripheral area of the carcass 52 is covered with an inner liner 56.

The tire T has a set direction of rotation when mounted on the vehicle. For example, as shown in FIG. 1B, an arrow A, indicating the direction of rotation when the tire is used, is impressed on a tire side Ts. And the tire, when it is to be fitted on the vehicle, is fitted such that the arrow A is in agreement with the advancing direction of the vehicle. It is to be noted that in the following description, the direction of tire rotation when the vehicle advances is referred to as "front" and that when it reverses as "back".

As shown in FIG. 2, the tread region 5 of the tire T is provided with a plurality of lug blocks 10. In other words, the tire T is a so-called tire for agricultural machinery. Each of the lug blocks 10 is so formed as to project radially outward from the bottom surface 9 in the tread region 5. Lug blocks 10 each extend from the axial center (width center) CL side toward the respective outer edges of the tire diagonally from the front to the back side. Because of this arrangement, when the tire T runs forward, the center CL side of the lug blocks 10 engages with the road surface earlier than the outer edges of the tire. That is, the tread pattern of this example has a plurality of lug blocks 10 formed diagonally from the axially outer sides toward inner side of the tire. The lug blocks 10 are arranged at equal intervals between each other in the circumferential direction. Also, one group of lug blocks on one axial side of the tire and the other of lug blocks on the other axial side thereof are staggered with each other in the circumferential direction. And they extend alternately in the circumferential direction.

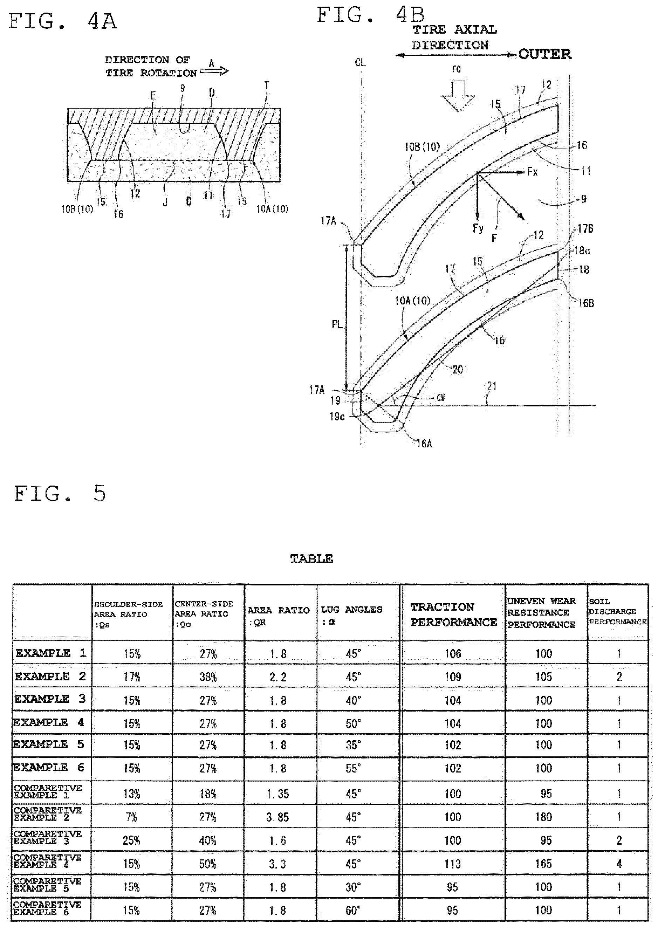

As shown in FIG. 1B and FIG. 2, each of the lug blocks 10 is defined by a leading side surface 11 located on the leading side of a lug block 10, a trailing side surface 12 located on the trailing side of a lug block 10, a center side surface 13 located on the center side of a lug block 10, a shoulder side surface 14 located on the shoulder side of a lug block 10, and a tread surface 15 which serves as a ground-engaging surface (contact patch) of the tire when the vehicle travels. The leading side surface 11, the trailing side surface 12, and the center side surface 13 are formed as smoothly curved surfaces running toward the bottom surface 9. It is to be noted that the leading side surface 11 is the surface facing the front in the direction of tire rotation. Also, the trailing side surface 12 is the surface facing the back in the direction of tire rotation. The center side surface 13 is formed as a smoothly curved surface connecting to the leading side surface 11 and the trailing side surface 12 on the center CL side. The shoulder side surface 14 is so formed as to extend in the tire radial direction along the tire side Ts of the tire T. The tread surface 15 is a top surface surrounded by the leading side surface 11, the trailing side surface 12, the center side surface 13, and the shoulder side surface 14. The tread surface 15, which is the footprint of the tire when it runs on a paved road or on farm land, produces propulsion from the force of friction as it comes in contact with $\pm D$ (see FIG. 4) on the paved road or on farm land. A front edge 16 is formed at the intersection between the tread surface 15 and the leading side surface 11, and a back edge 17 at the intersection between the tread surface 15 and the trailing side surface 12.

As shown in FIG. 2, the front edge 16 and the back edge 17 of each of the lug blocks 10 extend in linear, bent, or curved shape, or in a mixture of these shapes from the axially outer side toward the axially center CL side of the tire. Preferably, the front edge 16 and the back edge 17 are formed in a smoothly continuous shape from the axially outer end to the axially center CL. In this manner, the front edge 16 and the back edge 17 of the tread surface 15 of the lug block 10 formed in smooth shapes can improve traction performance without trampling the farm field. Also, the front edge 16 and the back edge 17 are so formed that the edge interval EL therebetween along the circumferential direction of the tire increases continuously and smoothly from the axially outer side toward the axially center CL side of the tire.

Also, the arrangement may be such that in the center region Rc to be discussed later, the leading side surface 11 of the lug block 10 has a leading-side inclined wall surface 11a and a leading-side wall surface 11b, the trailing side surface 12 thereof has a trailing-side inclined wall surface 12a and a trailing-side wall surface 12b, and the center side surface 13 thereof has a center-side inclined wall surface 13a and a center-side wall surface 13b.

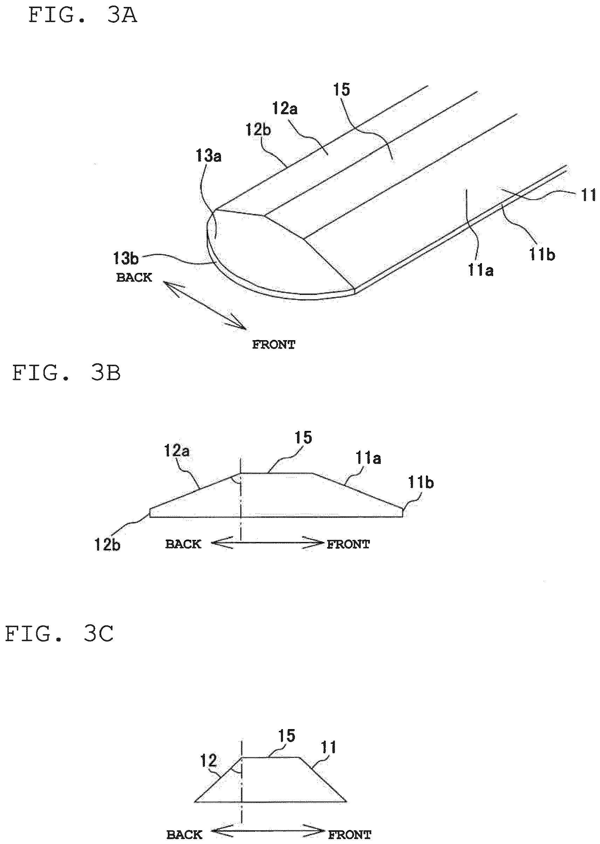

As shown in FIGS. 3A and 3B, the leading-side inclined wall surface 11a is inclined toward the leading side radially inward from the leading-side edge of the tread surface 15 and connects to the radially outer edge of the leading-side wall surface 11b projecting radially outward from the bottom surface 9 in the tread region 5. Also, the trailing-side inclined wall surface 12a is inclined toward the trailing side radially inward from the trailing-side edge of the tread surface 15 and connects to the radially outer edge of the trailing-side wall surface 12b projecting radially outward from the bottom surface 9 in the tread region 5. Further, the center-side inclined wall surface 13a is inclined toward the center side radially inward from the center-side edge of the tread surface 15 and connects to the radially outer edge of the center-side wall surface 13b projecting radially outward from the bottom surface 9 in the tread region 5. That is, in the center region Rc, the leading side surface 11, the trailing side surface 12, and the center side surface 13 are wall surfaces inclined radially inward in stages and form two-stage grooves between adjacent lug blocks 10 on the surface of the tread region 5.

The radial inclination angle of the leading-side inclined wall surface 11a, the trailing-side inclined wall surface 12a, and the center-side inclined wall surface 13a of the lug blocks 10 in the center region Rc is in the range of 10 degrees or more and 70 degrees or less. With the inclination angle set at 10 degrees or more and 70 degrees or less, the leading-side inclined wall surface 11a, the trailing-side inclined wall surface 12a, and the center-side inclined wall surface 13a, together with the tread surface 15, come in contact with the road surface when the vehicle travels. It is to be noted that as long as the radial inclination angle of the leading-side inclined wall surface 11a, the trailing-side inclined wall surface 12a, and the center-side inclined wall surface 13a is set in the range of 10 degrees or more and 70 degrees or less, the radial inclination angles of the leading-side inclined wall surface 11a, the trailing-side inclined wall surface 12a, and the center-side inclined wall surface 13a may differ from each other. For example, the arrangement may be such that the inclination angle of the leading-side inclined wall surface 11a is 60 degrees, the inclination angle of the trailing-side inclined wall surface 12a is 50 degrees, and the inclination angle of the center-side inclined wall surface 13a is 30 degrees.

As shown in FIG. 3C, the radial inclination angle of the leading side surface 11 and the trailing side surface 12 in the shoulder region Rc to be discussed later is in the range of 0 degrees or more and 45 degrees or less. That is, the leading-side inclined wall surface 11a, the trailing-side inclined wall surface 12a, and the center-side inclined wall surface 13a of the lug blocks 10 in the center region Rc are inclined more than the leading side surface 11 and the trailing side surface 12 in the shoulder region Rs. It is to be noted that the lug blocks 10 each extend from the axial center (width center) CL side toward the respective outer edges of the tire diagonally from the front to the back side. And the inclination angle of the leading side surface 11 and the trailing side surface 12 located in the regions other than the center region Rc and the shoulder regions Rs decreases gradually from the center side toward the respective outer sides to form integral wall surfaces with the leading side surface 11 and the trailing side surface 12 in the center region Rc and the leading side surface 11 and the trailing side surface 12 in the shoulder region Rs.

In this manner, the leading side surface 11, the trailing side surface 12, and the center side surface 13 in the center region Rc are inclined in stages, and the inclination angles thereof are greater than the inclination angles of the leading side surface 11 and the trailing side surface 12 in the shoulder regions Rs. As a result, it is possible to achieve necessary friction force and ground contact pressure to be discussed later in the center region Rc without interference between neighboring lug blocks 10 in the center region Rc during the travel of the vehicle. At the same time, it is possible to obtain the shear forces in the shoulder regions Rs.

The lug blocks 10 are each arranged in the tread region 5 to satisfy the following conditions. For the purpose of this invention, the center region Rc and the shoulder regions Rs are set in the tread region 5 of the tire T. The center region Rc is a region extending in the tire circumferential direction within a range of 15% of the tread width TW on the left and right sides of the tire axial center of the tread region 5. The shoulder regions Rs are regions extending in the tire circumferential direction within a range of 15% of the tread width TW from the respective contact patch edges of the tread region 5 toward the tire axial center CL.

And the areas of the tread surfaces 15 to be parts within a range for one-pitch length PL from the same position in the tire circumferential direction in the regions Rc and Rs are so set as to be within their predetermined ranges. The one-pitch length PL is the distance along the tire circumferential direction between the adjacent lug blocks from the same position in the tire circumferential direction. For example, the one-pitch length PL, as shown in FIG. 4B, is the distance along the tire circumferential direction between the center-side edge 17A of the back-side edge 17 of the lug block 10A (10) and the center-side edge 17A of the back-side edge 17 of the lug block 10B (10).

The area of the tread surfaces 15 which are parts within the center region Rc is referred to as Sc (hereinafter referred to as the center-side area Sc), and the area of the tread surfaces 15 which are parts within the shoulder regions Rc is referred to as Ss (hereinafter referred to as the shoulder-side area Ss). As shown by the hatching in FIG. 2, the center-side area Sc is the area given by the sum of area M1 and area M2, and the shoulder-side area Ss is the area given by the sum of area N1, area N2, and area N3. Also, the following description will be given by referring to the area of one-pitch length PL in the center region Rc as Spc (hereinafter referred to simply as the one-pitch area Spc) and the sum of the areas of one-pitch length PL in the left and right shoulder regions Rs as Sps (hereinafter referred to simply as the one-pitch area Sps).

Under these conditions, the center-side area ratio Qc, which is the ratio of the center-side area Sc to the one-pitch area Spc ((Sc/Spc) × 100) and the shoulder-side area ratio Qs, which is the ratio of the shoulder-side area Ss to the one-pitch area Sps ((Ss/Sps) × 100) are set such that 25%<Qc<40% and 10%<Qs<18%.

Also, the center-side area Sc and the shoulder-side area Ss should preferably be so set that the area ratio QR of the center-side area Sc to the shoulder-side area Ss is 1.8 to 2.2. With the center-side area Sc and the shoulder-side area Ss set like this, the shoulder region ground contact area and the center region ground contact area when the vehicle is running on a pavement or farm field are optimized. And accordingly, this will not only improve the traveling stability but also reduce uneven wear of the tires. Furthermore, this will improve traction and soil discharge performance on the farm field.

Also, it is preferable that the direction of extension of the lug blocks 10, or the angle $\alpha$ at which the lug blocks 10 extend relative to the tire axial direction (hereinafter referred to as the lug angle) is set at 35 to 55 degrees with respect to the tire axial direction. By doing so, the traction performance on the farm field can be further improved. It is to be noted that in this embodiment, the direction of extension of the lug blocks 10 is the direction of extension of the line 20 connecting the midpoint 18c of the line segment 18 connecting the shoulder-side edge 16B of the front-side edge 16 to the shoulder-side edge 17B of the back-side edge 17 and the midpoint 19c of the line segment 19 connecting the center-side edge 16A of the front-side edge 16 to the center-side edge 17A of the back-side edge 17. It is to be noted that the line 20 is the subtense connecting the midpoint 18c with the midpoint 19c at the shortest distance along the tire surface. And the angle of intersection of this line 20 with the straight line 21 along the tire axial direction is the lug angle $\alpha$.

Also, the tread width TW refers to the maximum ground contact distance in the tire axial direction of the tire T of an applicable size and ply rating fitted on a standard rim and inflated by 100% of the air pressure (maximum air pressure) as the internal pressure and under a maximum load as stipulated in the YEAR BOOK issued by JATMA (Japan Automobile Tire Manufacturers Association) . It should be appreciated that the present invention is subject to the standards applicable at the place of use or manufacture, such as the TRA standard and the ETRTO standard.

Hereinbelow, a description is given of the mechanism of traction on a farm field. The traction on a farm field is generated by two factors, namely, the friction forces acting between the tread surfaces 15 of lug blocks 10 and the direct shear forces shearing the ±D having entered between the lug blocks 10A and the lug blocks 10B adjacent to each other in the tire circumference direction. The friction forces are produced mainly by the center region, and the direct shear forces by the shoulder regions. The total traction NT, which is generated by the friction forces and direct shear force, can be expressed by the following equation (1) :

$$NT = FT + ST \qquad\qquad \text{equation (1)}$$

where FT is the friction force traction and ST is the shear force traction.

The friction force traction FT is given by equation (2):

$$FT = \mu \times PTOP \times ATOP \qquad\qquad \text{equation (2)}$$

where $\mu$ is the friction coefficient between the ±D and the tread surface 15 on a farm field, PTOP the contact pressure to the ±D by the tread surface 15, and ATOP the ground contact area of the tread surface 15.

The shear force traction ST is given by equation (3):

$$ST = (\phi \times PBottom + c) \times ABottom \qquad\qquad \text{equation (3)}$$

where $\phi$ is the internal friction coefficient of the ±D, PBottom the contact pressure to the ±D by the bottom surface 9, and ABottom the ground contact area of the bottom surface 9. C represents the adhesive force defined by the viscosity and the like of the ±D. Here, the internal friction coefficient denoted by $\phi$ is the degree of friction between the ±D.

The shear force can be increased by increasing the PBottom or the ABottom, which is the parameter of equation (3). By doing so, the area of the bottom surface 9 between the adjacent lug blocks 10 will become wider, thus improving the traction performance of the tire T on farm fields.

Here a description is given of the direct shear force. As shown in FIGS. 4A and 4B, the direct shear force is the stress acting on the ±D compressed between the adjacent lug blocks 10A and 10B in the direction of tire rotation (arrow A) by the rotation of a running tire. As the tire T rotates in the arrow A direction on a farm field, the ±D in the region E between a plurality of front and back lug blocks 10 in the arrow A direction gets compressed in the arrow A direction, under the force FO from the lug blocks 10 on the front side in the arrow A direction. The ±D between a plurality of front and back lug blocks 10 in the arrow A direction gets compressed in the tire radial direction under the force from the bottom surface 9 by the weight of the vehicle to which the tire T is fitted.

Here, in FIG. 4B, $\alpha$ represents the inclination angle of the lug block 10 relative to the tire axial direction. The lug block 10 under the force FO exerts the force of F to the ±D in the region E. By denoting the force acting in the tire axial direction of the force F by Fx and the force acting in the tire circumferential direction by Fy, the force Fx = FO × $\sin\alpha$ × $\cos\alpha$ and the force Fy = FO × $\cos2\alpha$. Accordingly, near the virtual line connecting the tread surfaces 15 together of the lug blocks 10, a shear plane J of the ±D is formed as shown in FIG. 4A.

And as the tire T rotates in the arrow A direction, a reaction force equal in magnitude to the force Fy that the ±D compressed between the lug blocks 10 receives will work on the lug block 10, thereby generating traction on a farm field.

The friction force may be increased by increasing the center-side area Sc of the tread surfaces 15 of the lug blocks 10. This will increase the ground contact area of the tread surfaces 15 and the ground contact pressure, thus improving the traction performance by the friction force. As already mentioned, it is preferable that the center-side area ratio Qc, which is calculated from the center-side area Sc of tread surface 15/one-pitch area Spc, is 25 to 40%. If the center-side area ratio Qc is 25% or less, the ground contact area in the center region Rc will be small, which cannot produce sufficient friction force. Also, if the center-side area ratio Qc is 40% or more, then the groove volume in the center region Rc (volume surrounded by the bottom area 9, the leading side surface 11, and the trailing side surface 12 in the center region Rc) will be small, which compromises the soil discharge performance. The lowered soil discharge performance may cause mud to pack the grooves and decrease the direct shear force during travel on a farm field. And this may reduce traction.

The direct shear force may be enhanced by making the shoulder-side area Ss of the tread surfaces 15 smaller, thereby making the ground contact area of the bottom surface 9 and the ground contact pressure greater. This will improve the traction performance by the shear force. As already mentioned, it is preferable that the shoulder-side area ratio Qs, which is calculated from the shoulder-side area Ss of tread surface 15/one-pitch area Sps, is 10 to 18%. If the shoulder-side area ratio Qs is 10% or less, the rigidity on the shoulder side of the lug block 10 will be insufficient, which may fail to produce sufficient shear force. Also, if the shoulder-side area ratio Qs is 18% or more, then the ground contact area of the bottom surface 9 between the adjacent lug blocks 10 in the tire circumferential direction will be small, which cannot realize improvement in the shear force traction ST.

Also, if the center-side area ratio Qc is 15% or less (1.5 times or less) of the shoulder-side area ratio Qs, the traction performance will drop. If the center-side area ratio Qc is 250% or more (2.5 times or more) of the shoulder-side area ratio Qs, the traction performance may improve, but the rigidity on the center side of the lug blocks 10 may far surpass that on the shoulder side (the rigidity balance in the tire axial direction will be lost). This may give rise to uneven wear.

It is preferable that the lug blocks 10 have each a lug angle $\alpha$ in the range of 35 to 55 degrees. Here the lug angle $\alpha$ is the angle of extension of the lug blocks 10 in the tire axial direction. With the lug angle $\alpha$ set in the range of 35 to 55 degrees, the shear force in the shoulder regions can be maximized.

With the tire T of this embodiment, the trailing (scraping) edge of the ±D in the tire axial direction is such that the higher bottom pressure makes the shear force greater. Hence, it features better traction performance than conventional tires on farm fields. As a result, a stable traction performance is assured on rough terrains while retaining uneven wear resistance on paved roads. As already mentioned, the center-side area Sc, the shoulder-side area Ss, and the lug angle $\alpha$ may be optimized, and thereby the uneven wear resistance during travel on paved roads and the traction during travel on farm fields can both be achieved.

Using the specifications listed in the table of FIG. 5, traction tests, wear tests, and mud packing tests were conducted on the tires of AGR710/70R42 size prepared as Example Tires 1 to 6 and Comparative Example Tires 1 to 6. In those tests, the prepared tires were fitted on the predetermined rim, and they were put on the rear wheels of the test vehicle JD8530. The evaluations were performed under the conditions of 160 kPa internal pressure and 6700 kgf load.

With the Example Tires 1, 3, 4, 5, 6, the shoulder-side area ratio Qs was 15%, the center-side area ratio Qc was 27%, the area ratio QR was 1.8, and their respective lug angles $\alpha$ were changed. The lug angle $\alpha$ of Example Tire 1 was 45 degrees, the lug angle $\alpha$ of Example Tire 3 was 40 degrees, the lug angle $\alpha$ of Example Tire 4 was 50 degrees, the lug angle $\alpha$ of Example Tire 5 was 35 degrees, and the lug angle $\alpha$ of Example Tire 6 was 55 degrees. With Example Tire 2, the shoulder-side area ratio Qs was increased to 17% from the 15% of Example Tire 1, and the center-side area ratio Qc was increased to 38% from the 27%. The area ratio QR of Example Tire 2 at this time was 2.2.

With Comparative Example Tire 1, the shoulder-side area ratio Qs was decreased to 13% from the 15% of Example Tire 1, and the center-side area ratio Qc was decreased to 18% from the 27%. The area ratio QR of Comparative Example Tire 1 at this time was 1.35.

With Comparative Example Tire 2, the center-side area ratio Qc was the same as that of Example Tire 1, and the shoulder-side area ratio Qs was decreased to 7% from the 15% of Example Tire 1. The area ratio QR of Comparative Example Tire 2 at this time was 3.85.

With Comparative Example Tire 3, the shoulder-side area ratio Qs was increased to 25% from the 15% of Example Tire 1, and the center-side area ratio Qc was increased to 40% from the 27%. The area ratio QR of Comparative Example Tire 3 at this time was 1.6.

With Comparative Example Tire 4, the shoulder-side area ratio Qs was the same as that of Example Tire 1, and the center-side area ratio Qc was increased to 50% from the 27%. The area ratio QR of Comparative Example Tire 4 at this time was 3.3.

With Comparative Example Tire 5, the shoulder-side area ratio Qs and the center-side area ratio Qc were the same as those of Example Tire 1, and the lug angle $\alpha$ was increased to 60 degrees from the 45 degrees. It is to be noted that in the following description, Example Tires 1 to 6 will be referred simply as Examples 1 to 6, and Comparative Example Tires 1 to 6 as Comparative Examples 1 to 6.

Traction tests:

The traction tests were conducted to evaluate traction performance of the tires on farm fields. The evaluation was performed by operating the test vehicle on farm land (BS test course Columbiana PG). The evaluation of the traction tests was based on traction measurements with Comparative Examples 1 to 6 and Examples 1 to 6 and relative evaluation by indexation with the traction measurement results of Comparative Example 1 as 100. It is to be noted that the greater the value, the better the traction performance is.

Wear tests:

The wear tests were conducted to evaluate uneven wear resistance of the tires . The evaluation was performed by operating the test vehicle on the test circuit (BS test course Columbiana PG). The evaluation of the uneven wear tests was based on the measurements of center wear depth and shoulder wear depth after predetermined hours of test run using Comparative Examples 1 to 6 and Examples 1 to 4 and indexation with center wear depth/ shoulder wear depth being 1 as 100. The values get smaller than 100 as the center wear depth increases above shoulder wear depth, and the values get larger than 100 as the shoulder wear depth increases above center wear depth. And the closer the value to 100, the better the uneven wear resistance.

Mud packing tests:

The mud packing tests were conducted to evaluate the soil discharge performance of the tires. The evaluation was performed by operating the test vehicle on farmland (BS test course Columbiana PG) . The evaluation of the mud packing tests was based on the 1 to 5 scale evaluation of mud packing between lug blocks. It is to be noted that the smaller the value, the better the soil discharge performance (less mud packing).

As evident in the table of FIG. 5, Examples 1 to 6 showed excellence in all of traction performance, uneven wear resistance, and soil discharge performance.

<Effects of shoulder-side area ratio Qs and center-side area ratio Qc>

First, the effects of shoulder-side area ratio Qs are explained using Example 1 and Comparative Example 2. With Comparative Example 2, when the shoulder-side area ratio Qs only is decreased from that of Example 1, it was found that the uneven wear resistance drops markedly although the traction performance is maintained.

Next, the effects of center-side area ratio QC are explained using Example 1 and Comparative Example 4. With Comparative Example 4, when the center-side area ratio Qc only is increased from that of Example 1, it was found that the uneven wear resistance drops and mud packing increases although the traction performance is improved greatly.

Next, the effects when both the shoulder-side area ratio Qs and the center-side area ratio Qc are changed are explained using Examples 1 and 2 and Comparative Examples 1 and 3. With Comparative Example 1, when the shoulder-side area ratio Qs and the center-side area ratio Qc are decreased from those of Example 1, it was found that both the traction performance and the uneven wear resistance drop. Also, with Comparative Example 2, when the shoulder-side area ratio Qs and the center-side area ratio Qc are increased from those of Example 2, it was found that both the traction performance and the uneven wear resistance drop.

Effects of lug angle $\alpha$:

The effects of lug angle $\alpha$ are explained using Examples 1, 3, 4, 5, 6 and Comparative Examples 5 and 6. With Examples 1, 3, 4, 5, 6 and Comparative Examples 5 and 6, the shoulder-side area ratio Qs, the center-side area ratio Qc, and the area ratio QR are all the same, but their respective lug angles $\alpha$ only differ from each other. With the lug angles $\alpha$ set as with Examples 1, 3, 4, 5, 6, it was found that the traction performance and the uneven wear resistance show improvement. That is, with Comparative Example 6, when the lug angle $\alpha$ is made smaller than that of Example 5, it was found that the traction performance drops although the uneven wear resistance is maintained. Also, with Comparative Example 6, when the lug angle $\alpha$ is made larger than that of Example 6, it was found that the traction performance drops although the uneven wear resistance is maintained.

Accordingly, with the lug angle $\alpha$ set in the range of 35 to 55 degrees, it was found that the traction performance can be improved while maintaining the uneven wear resistance.

Effects of area ratio QR:

The effects of area ratio QR are explained using Examples 1 and 2 and Comparative Examples1 to 4. It was found that the area ratio QR of Examples 1 and 2 show improved traction performance and uneven wear resistance. Note that with Example 2 having a larger area ratio QR than Example 1, the mud packing was slightly more than Example 1. With Comparative Examples 1 and 3 having smaller area ratios QR than that of Example 1, it was found that the traction performance and uneven wear resistance drop. Also, with Comparative Example 3, mud packing was slightly more than Comparative Example 1.

Also, with Comparative Example 4 whose area ratio QR is smaller than Comparative Example 2 and larger than Example 2, the uneven wear resistance markedly dropped while the traction performance improved over Example 2. In addition, much mud packing was observed.

With Comparative Example 2 whose area ratio QR was the greatest, the traction performance dropped greatly from those of Comparative Example 4 and Examples 1 and 2. Also, with Comparative Example 2, the uneven wear resistance dropped markedly from Comparative Example 4.

Therefore, it was found that the traction performance and the uneven wear resistance can be improved by setting the shoulder-side area ratio Qs and the center-side area ratio Qc respectively such that the area ratio QR between the shoulder-side area ratio Qs and the center-side area ratio Qc is in the range of 1.8 to 2.2.

Description of Reference Numerals:

| 9 | bottom surface |
|---|---|
| 10 | lug block |
| 15 | tread surface |
| CL | axial center |
| Qc | center-side area ratio |
| Qs | shoulder-side area ratio |
| QR | area ratio |
| Rc | center region |
| Rs | shoulder region |
| Sc | center-side area |
| Ss | shoulder-side area |
| Spc | one-pitch area (center-side) |
| Sps | one-pitch area (shoulder-side) |
| T | tire |
| TW | tread width |

**Claims**

1.  A tire (T) having a plurality of lug blocks (10) on the tread which are arranged at regular intervals along the tire circumferential direction,
    wherein the lug blocks (10) extend diagonally at 35 to 55 degrees with respect to the tire axial direction and have tread surfaces (15), and
    **characterized in that** the center-side area Sc, which is the area of the tread surfaces (15) which are parts within a one-pitch area Spc, is 25% to 40% of the one-pitch area Spc, and the shoulder-side area Ss, which is the area of the tread surfaces (15) which are parts within a one-pitch area Sps, is 10% to 18% of the one-pitch area Sps, where one-pitch area Spc is the area for one-pitch length of lug blocks (10) adjacent to each other in the tire circumferential direction from the same position in the tire circumferential direction in a center region (Rc), which extends in the tire circumferential direction within a range of 15% of the tread width (TW) on the left and right sides of the tire axial center of the tread, and where one-pitch area Sps is the sum of the areas for one-pitch length of lug blocks (10) adjacent to each other in the tire circumferential direction from the same position in the tire circumferential direction in shoulder regions (Rs), which extend in the tire circumferential direction within a range of 15% of the tread width (TW) from the respective ends of the tread region toward the tire axial center.

2. A tire (T) of claim 1 wherein the ratio of the center-side area Sc to the shoulder-side area Ss is in the range of 1.8 to 2.2.

3. A tire (T) of claim 1 or claim 2 wherein the lug blocks (10) in the shoulder regions (Rs) have each a leading-side surface (11) positioned on the leading side of the lug block (10) and a trailing-side surface (12) positioned on the trailing side of the lug block (10), and the lug blocks (10) in the center region (Rc) are each defined by a tread surface (15), a leading-side surface (11) positioned on the leading side of the lug block (10), a trailing-side surface (12), and a center-side surface (13) positioned on the center side of the lug block (10), and
wherein the leading-side surface (11) in the center region (Rc) has a leading-side wall surface (11b) projecting radially outward from a bottom surface (9) in the tread region (5) and a leading-side inclined wall surface (11a) inclined radially inward from the leading-side edge of the tread surface (15) toward the leading side and connecting to the radially outer edge of the leading-side wall surface (11b),
wherein the trailing-side surface (12) in the center region (Rc) has a trailing-side wall surface (12b) projecting radially outward from a bottom surface (9) in the tread region (5) and a trailing-side inclined wall surface (12a) inclined radially inward from the trailing-side edge of the tread surface (15) toward the trailing side and connecting to the radially outer edge of the trailing-side wall surface 12b), and
wherein the center-side surface (13) in the center region (Rc) has a center-side wall surface (13b) projecting radially outward from a bottom surface (9) in the tread region (5) and a center-side inclined wall surface (13a) inclined radially inward from the center-side edge of the tread surface (15) toward the center side and connecting to the radially outer edge of the center-side wall surface (13b), and
wherein the leading-side inclined wall surface (11a), the trailing-side inclined wall surface (12a), and the center-side inclined wall surface (13a) are more inclined than the leading-side surface (11) and the trailing-side surface (12) in the shoulder regions (Rs).

4. A tire (T) of claim 3, wherein, in the cross section of the lug blocks (10) in the center region (Rc), the inclination angle of the leading-side inclined wall surface (11a), the trailing-side inclined wall surface (12a), and the center-side surface (13) with respect to the radial direction is 10 degrees or more and 70 degrees or less.

**Patentansprüche**

1. Reifen (T), der mehrere Stollenblöcke (10) auf der Lauffläche aufweist, die in regelmäßigen Abständen entlang der Reifenumfangsrichtung angeordnet sind,
wobei sich die Stollenblöcke (10) in Diagonalrichtung bei 35 bis 55 Grad in Bezug auf die Reifenaxialrichtung erstrecken und Laufflächen (15) aufweisen, und
**dadurch gekennzeichnet, dass** die Mittenseitenfläche Sc, welche die Fläche der Laufflächen (15) ist, die Teile innerhalb einer Ein-Abstandsfläche Spc sind, 25 % bis 40 % der Ein-Abstandsfläche Spc beträgt und die Schulterseitenfläche Ss, welche die Fläche der Laufflächen (15) ist, die Teile innerhalb einer Ein-Abstandsfläche Sps sind, 10 % bis 18 % der Ein-Abstandsfläche Sps beträgt, wobei die Ein-Abstandsfläche Spc die Fläche für eine Ein-Abstandslänge von einander in der Reifenumfangsrichtung benachbarten Stollenblöcken (10) von der gleichen Position in der Reifenumfangsrichtung in einem Mittenbereich (Rc) ist, der sich in der Reifenumfangsrichtung innerhalb eines Bereichs von 15 % der Laufflächenbreite (TW) auf der linken und der rechten Seite der Reifenaxialmitte der Lauffläche erstreckt, und wobei die Ein-Abstandsfläche Sps die Summe der Flächen für eine Ein-Abstandslänge von einander in der Reifenumfangsrichtung benachbarten Stollenblöcken (10) von der gleichen Position in der Reifenumfangsrichtung in Schulterbereichen (Rs) ist, die sich in der Reifenumfangsrichtung innerhalb eines Bereichs von 15 % der Laufflächenbreite (TW) von den jeweiligen Enden des Laufflächenbereichs zu der Reifenaxialmitte erstrecken.

2. Reifen (T) nach Anspruch 1, wobei das Verhältnis der Mittenseitenfläche Sc zu der Schulterseitenfläche Ss in dem Bereich von 1,8 bis 2,2 liegt.

3. Reifen (T) nach Anspruch 1 oder Anspruch 2, wobei die Stollenblöcke (10) in den Schulterbereichen (Rs) jeweils eine Vorderseitenfläche (11), die auf der vorderen Seite des Stollenblocks (10) angeordnet ist, und eine Hinterseitenfläche (12), die auf der hinteren Seite des Stollenblocks (10) angeordnet ist, aufweisen und die Stollenblöcke (10) in dem Mittenbereich (Rc) jeweils durch eine Lauffläche (15), eine Vorderseitenfläche (11), die auf der vorderen Seite des Stollenblocks (10) angeordnet ist, eine Hinterseitenfläche (12), und eine Mittenseitenfläche (13), die auf der Mittenseite des Stollenblocks (10) angeordnet ist, definiert werden und

wobei die Vorderseitenfläche (11) in dem Mittenbereich (Rc) eine Vorderseiten-Wandfläche (11b), die von einer Bodenfläche (9) in dem Laufflächenbereich (5) in Radialrichtung nach außen vorspringt, und eine geneigte Vorderseiten-Wandfläche (11a), die von der Vorderseitenkante der Lauffläche (15) in Radialrichtung nach innen zu der Vorderseite hin geneigt ist und sich mit der in Radialrichtung äußeren Kante der Vorderseiten-Wandfläche (11b) verbindet, aufweist,

wobei die Hinterseitenfläche (12) in dem Mittenbereich (Rc) eine Hinterseiten-Wandfläche (12b), die von einer Bodenfläche (9) in dem Laufflächenbereich (5) in Radialrichtung nach außen vorspringt, und eine geneigte Hinterseiten-Wandfläche (12a), die von der Hinterseitenkante der Lauffläche (15) in Radialrichtung nach innen zu der Hinterseite hin geneigt ist und sich mit der in Radialrichtung äußeren Kante der Hinterseiten-Wandfläche (12b) verbindet, aufweist und

wobei die Mittenseitenfläche (13) in dem Mittenbereich (Rc) eine Mittenseiten-Wandfläche (13b), die von einer Bodenfläche (9) in dem Laufflächenbereich (5) in Radialrichtung nach außen vorspringt, und eine geneigte Mitteseiten-Wandfläche (13a), die von der Mittenseitenkante der Lauffläche (15) in Radialrichtung nach innen zu der Mittenseite hin geneigt ist und sich mit der in Radialrichtung äußeren Kante der Mittenseiten-Wandfläche (13b) verbindet, aufweist und

wobei die geneigte Vorderseiten-Wandfläche (11a), die geneigte Hinterseiten-Wandfläche (12a) und die geneigte Mittenseiten-Wandfläche (13a) mehr geneigt sind als die Vorderseitenfläche (11) und die Hinterseitenfläche (12) in den Schulterbereichen (Rs).

4. Reifen (T) nach Anspruch 3, wobei, in dem Querschnitt der Stollenblöcke (10) in dem Mittenbereich (Rc), der Neigungswinkel der geneigten Vorderseiten-Wandfläche (11a), der geneigten Hinterseiten-Wandfläche (12a) und der Mittenseitenfläche (13) in Bezug auf die Radialrichtung 10 Grad oder mehr und 70 Grad oder weniger beträgt.

## Revendications

1. Bandage pneumatique (T), comportant plusieurs pavés à barrettes (10) sur la bande de roulement, qui sont agencés à des intervalles réguliers le long de la direction circonférentielle du bandage pneumatique ;

   dans lequel les pavés à barrettes (10) s'étendent dans une direction diagonale, entre 35 et 55 degrés par rapport à la direction axiale du bandage pneumatique, et comportent des surfaces de bande de roulement (15) ; et

   **caractérisé en ce que** la zone du côté central Spc, à savoir la zone des surfaces de bande de roulement (15) qui constituent des parties dans le cadre d'une zone d'un pas Spc, représente 25% à 40% de la zone d'un pas Spc, la zone du côté de l'épaulement Ss, à savoir la zone des surfaces de bande de roulement (15) qui constituent des parties dans une zone d'un pas Sps, représentant 10% à 18% de ladite zone d'un pas Sps, la zone d'un pas Spc étant la zone pour la longueur d'un pas de pavés à barrettes (10) adjacents les uns aux autres dans la direction circonférentielle du bandage pneumatique, à partir de la même position, dans la direction circonférentielle du bandage pneumatique, dans une région centrale (Rc), s'étendant dans la direction circonférentielle du bandage pneumatique, dans un intervalle représentant 15% de la largeur de la bande de roulement (TW) sur les côtés de gauche et de droite du centre axial du bandage pneumatique de la bande de roulement, une zone d'un pas représentant la somme des zones pour la longueur d'un pas des pavés à barrettes (10) adjacents les uns aux autres, dans la direction circonférentielle du bandage pneumatique, à partir de la même position dans la direction circonférentielle du bandage pneumatique, dans des régions d'épaulement (Rs), s'étendant dans la direction circonférentielle du bandage pneumatique, dans un intervalle représentant 15% de la largeur de la bande de roulement (TW), à partir des extrémités respectives de la région de bande de roulement vers le centre axial du bandage pneumatique.

2. Bandage pneumatique (T) selon la revendication 1, dans lequel le rapport entre la zone du côté central Sc et la zone du côté de l'épaulement Ss est compris dans l'intervalle allant de 1,8 à 2,2.

3. Bandage pneumatique (T) selon les revendications 1 ou 2, dans lequel les pavés à barrettes (10) dans les régions d'épaulement (Rs) comportent chacun une surface du côté avant (11) positionnée sur le côté avant du pavé à barrettes (10), et une surface du côté arrière (12) positionnée sur le côté arrière du pavé à barrettes (10), les pavés à barrettes (10) dans la région centrale (Rc) étant chacun définis par une surface de bande de roulement (15), une surface du côté avant (11) positionnée sur le côté avant du pavé à barrettes (10), une surface du côté arrière (12) et une surface du côté central (13) positionnée sur le côté central du pavé à barrettes (10) ; et

dans lequel la surface du côté avant (11) dans la région centrale (Rc) comporte une surface de paroi du côté avant (11b), débordant radialement vers l'extérieur d'une surface inférieure (9) dans la région de bande de roulement (5), et une surface de paroi inclinée du côté avant (11a) inclinée radialement vers l'intérieur du bord du côté avant de la surface de bande de roulement (15) vers le côté avant et connectée au bord radialement externe de la surface de paroi inclinée du côté avant(11b) ;

dans lequel la surface du côté arrière (12) dans la région centrale (Rc) comporte une surface de paroi du côté arrière (12b) débordant radialement vers l'extérieur d'une surface inférieure (9) dans la région de bande de roulement (5), et une surface de paroi inclinée du côté arrière (12a) inclinée radialement vers l'intérieur du bord du côté arrière de la surface de bande de roulement (15) vers le côté arrière et connectée au bord radialement externe de la surface de paroi du côté arrière (12b) ; et

dans lequel la surface du côté central (13) dans la région centrale (Rc) comporte une surface de paroi du côté central (13b) débordant radialement vers l'extérieur d'une surface inférieure (9) dans la région de bande de roulement (5), et une surface de paroi inclinée du côté central (13a) inclinée radialement vers l'intérieur, du bord du côté central de la surface de bande de roulement (15) vers le côté central et connectée au bord radialement externe de la surface de paroi du côté central (13b) ; et

dans lequel la surface de paroi inclinée du côté avant (11a), la surface de paroi du côté arrière (12a) et la surface de paroi inclinée du côté central (13a) sont inclinées davantage que la surface du côté avant (11) et la surface du côté arrière (12) dans les régions d'épaulement (Rs).

4. Bandage pneumatique (T) selon la revendication 3, dans lequel, dans la section transversale des pavés à barrettes (10) dans la région centrale (Rc), l'angle d'inclinaison de la surface de paroi inclinée du côté avant (11a), de la surface de paroi inclinée du côté arrière (12a) et de la surface du côté central (13) par rapport à la direction radiale correspond à 10 degrés ou plus et à 70 degrés ou moins.

FIG. 1A

FIG. 1B

FIG. 2

FIG. 3A

FIG. 3B

FIG. 3C

## FIG. 4A

DIRECTION OF
TIRE ROTATION

## FIG. 4B

TIRE AXIAL
DIRECTION
OUTER

## FIG. 5

TABLE

| | SHOULDER-SIDE AREA RATIO :Qs | CENTER-SIDE AREA RATIO :Qc | AREA RATIO :QR | LUG ANGLES :α | TRACTION PERFORMANCE | UNEVEN WEAR RESISTANCE PERFORMANCE | SOIL DISCHARGE PERFORMANCE |
|---|---|---|---|---|---|---|---|
| EXAMPLE 1 | 15% | 27% | 1.8 | 45° | 106 | 100 | 1 |
| EXAMPLE 2 | 17% | 38% | 2.2 | 45° | 109 | 105 | 2 |
| EXAMPLE 3 | 15% | 27% | 1.8 | 40° | 104 | 100 | 1 |
| EXAMPLE 4 | 15% | 27% | 1.8 | 50° | 104 | 100 | 1 |
| EXAMPLE 5 | 15% | 27% | 1.8 | 35° | 102 | 100 | 1 |
| EXAMPLE 6 | 15% | 27% | 1.8 | 55° | 102 | 100 | 1 |
| COMPARETIVE EXAMPLE 1 | 13% | 18% | 1.35 | 45° | 100 | 95 | 1 |
| COMPARETIVE EXAMPLE 2 | 7% | 27% | 3.85 | 45° | 100 | 180 | 1 |
| COMPARETIVE EXAMPLE 3 | 25% | 40% | 1.6 | 45° | 100 | 95 | 2 |
| COMPARETIVE EXAMPLE 4 | 15% | 50% | 3.3 | 45° | 113 | 165 | 4 |
| COMPARETIVE EXAMPLE 5 | 15% | 27% | 1.8 | 30° | 95 | 100 | 1 |
| COMPARETIVE EXAMPLE 6 | 15% | 27% | 1.8 | 60° | 95 | 100 | 1 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130340906 A
- JP 2006273052 A

- JP 2012051478 A